# FASCICULE DE BREVET EUROPEEN

(11) **EP 3 389 913 B1**
(45) Date de publication et mention de la délivrance du brevet: **08.04.2020**
(21) Numéro de dépôt: 16809441.5
(22) Date de dépôt: 15.12.2016
(51) Int. Cl.: B23K 20/12

(54) **TETE DE SOUDAGE PAR FRICTION MALAXAGE AVEC DES ORGANES D'ACCOUPLEMENT ET AU MOINS UN ELEMENT ELASTIQUE**
REIBSCHWEISSKOPF MIT KUPPLUNGSELEMENTEN UND MINDESTENS EINEM ELASTISCHEN ELEMENT
FRICTION STIR WELDING HEAD HAVING COUPLING MEMBERS AND AT LEAST ONE RESILIENT ELEMENT

(30) Priorité: 18.12.2015 FR 1562796
(43) Date de publication de la demande: 24.10.2018
(73) Titulaire: Ecole Normale Superieure De Rennes, 35170 Bruz (FR); Institut Maupertuis, 35170 Bruz (FR)
(72) Inventeur: DUBOURG, Laurent, 35760 Saint Gregoire (FR); MOGNOL, Pascal, 35000 Rennes (FR); BARRAU, Sébastien, 35310 Cintre (FR); SEVESTRE, Gilles, 50350 Donville Les Bains (FR); MACE, Yann, 35131 Chartres De Bretagne (FR)
(74) Mandataire: Regimbeau
(86) Numéro de dépôt international: PCT/EP2016/081203
(87) Numéro de publication internationale: WO 2017/102953

(56) Documents cités:
- WO-A1-00/02704
- US-A- 6 102 636
- US-A1- 2008 218 014

## Description

L'invention concerne une tête de soudage par friction malaxage telle que définies dans le préambule de la revendication 1 (voir, par exemple, WO 00/02704).

Un domaine d'application de l'invention concerne les machines-outils, par exemple à commande numérique.

En particulier, l'invention vise à pouvoir réaliser un soudage par friction malaxage à l'aide d'une machine-outil disposant d'une broche tournante mise en rotation par un moteur de la machine.

Le soudage par friction malaxage fait intervenir un outil de soudage spécifique, qu'il faut faire tourner pour le faire pénétrer dans les deux pièces mécaniques à souder et qu'il faut déplacer tout en le faisant tourner le long d'une ligne de joint de ces deux pièces selon une trajectoire prescrite. La pénétration de l'outil dans la pièce doit être constante afin de garantir la qualité de la soudure.

Par conséquent, une force importante est exercée par l'outil de soudage tournant sur les pièces.

Le problème d'effectuer un soudage par friction malaxage à l'aide d'une machine-outil est que la broche d'usinage motrice de la machine-outil n'est pas dimensionnée pour ce travail.

Or, par réaction lors du soudage, des efforts importants provenant de l'outil sont exercés sur la broche de la machine-outil. Ces efforts risquent de détériorer prématurément la broche de la machine-outil.

De plus, la distance (l'altitude par exemple) des pièces par rapport à la machine-outil peut varier en raison de l'imprécision dimensionnelle des pièces, des erreurs de positionnement des pièces dans la machine-outil ou la déformation des pièces pendant le soudage.

L'invention vise à pallier les inconvénients de l'état de la technique, en proposant une tête de soudage par friction malaxage, qui protège la broche motrice de la machine par rapport aux efforts exercés lors du soudage et en proposant une compensation mécanique de la position de la tête qui protège des variations de distances des pièces à souder par rapport à la machine-outil, assurant ainsi une qualité constante de soudure.

Une tête (1) de soudage par friction malaxage conformément à l'invention est définie dans la revendication 1. Cette tête suivant l'invention est destinée à être fixée sur une machine pour réaliser un soudage par friction malaxage à l'aide d'un outil destiné à être fixé à un porte-outil (4), faisant partie de la tête, et comprend les caractéristiques suivantes :
la tête comporte un bâti extérieur (2), destiné à être fixé à un châssis de la machine, une pièce (7) d'entraînement, destinée à être entrainée par une broche d'entrainement, qui fait partie de la machine et qui est montée rotative autour d'un axe par rapport au châssis, pour entraîner en rotation le porte-outil (4) autour de l'axe par mise en rotation de la pièce (7) d'entraînement,
le porte-outil (4) est fixé à un arbre (3) monté rotatif autour de l'axe dans un coulisseau (5), lequel est guidé en translation selon l'axe dans le bâti (2),
au moins une pièce (6) d'accouplement est guidée en translation selon l'axe sur la pièce (7) d'entraînement, la pièce (6) d'accouplement et la pièce (7) d'entraînement ont respectivement des premiers et deuxièmes organes (61, 71) d'accouplement en rotation l'un avec l'autre autour de l'axe pour entraîner en rotation la pièce (6) d'accouplement à partir de la pièce (7) d'entraînement,
la pièce (6) d'accouplement et l'arbre (3) sont accouplés en rotation autour de l'axe pour entraîner en rotation l'arbre (3) à partir de la pièce (6) d'accouplement,
au moins un élément élastique (9) de report des efforts axiaux étant interposé entre le coulisseau (5) et le bâti (2).

Ainsi, l'invention propose une tête de soudage par friction malaxage, permettant de souder avec des centres d'usinage MOCN (Machine-Outil à Commande Numérique) déjà existants. La tête suivant l'invention permet de reporter les efforts sur le bâti extérieur, et de là sur le châssis de la machine sur laquelle la tête doit être montée, pour isoler la broche de cette machine vis-à-vis des efforts. Les éléments fragiles, tels que la broche et les roulements de la machine sont ainsi protégés, uniquement le couple de rotation est fourni par la broche. L'invention permet de reporter les efforts sur le bâti de la machine et dans le même temps de protéger les broches de ces efforts. En outre, l'invention permet d'intégrer à la tête de soudage un système d'adaptation aux variations d'altitude ou de distance des pièces à souder (en anglais : « compliance »), afin d'avoir une qualité de soudure constante, mais sans avoir à implémenter obligatoirement une commande dans l'automate de la machine-outil. L'invention permet un contrôle d'effort, c'est-à-dire que la tête de soudage permet à l'outil de soudage FSW de garder une position constante par rapport aux pièces à souder malgré les défauts géométriques des surfaces à souder.

Suivant un mode de réalisation, au moins un organe (8) souple d'absorption des vibrations est interposé entre la pièce (6) d'accouplement et l'arbre (3), la pièce (6) d'accouplement et l'arbre (3) ayant respectivement des troisièmes et quatrièmes organes (62, 32) d'accouplement en rotation par l'intermédiaire de l'organe souple (8) d'absorption autour de l'axe pour entraîner en rotation l'arbre (3) à partir de la pièce (6) d'accouplement. On protège ainsi la broche vis-à-vis des vibrations provenant de l'outil et exercées lors du soudage. La broche de la machine est ainsi isolée des vibrations de l'outil.

Suivant un mode de réalisation, l'élément élastique (9) comporte au moins un ressort (91) de compression.

Suivant un mode de réalisation, l'élément élastique (9) comporte au moins une rondelle élastique.

Suivant un mode de réalisation, les premiers et deuxièmes organes (61, 71) d'accouplement comportent respectivement des premières et deuxièmes cannelures s'étendant selon l'axe, pour guider selon l'axe la pièce (6) d'accouplement par rapport à la pièce (7) d'entraînement, et engrenant l'une avec l'autre autour de l'axe pour entraîner en rotation la pièce (6) d'accouplement à partir de la pièce (7) d'entraînement.

Suivant un mode de réalisation, les troisièmes et quatrièmes organes (62, 32) d'accouplement en rotation comportent respectivement des troisièmes et quatrièmes dents (62, 32) engrenant les unes avec les autres autour de l'axe par l'intermédiaire de l'organe (8) d'absorption.

Suivant un mode de réalisation, l'organe (8) d'absorption des vibrations comporte une embase (81) sur la périphérie de laquelle sont fixées des pattes (82), qui délimitent entre elles autour de l'axe (A) des premiers et deuxièmes intervalles (831, 832) dans lesquels sont insérés respectivement les troisièmes dents (62) et les quatrièmes dents (32).

Suivant un mode de réalisation, le coulisseau (5) est solidaire d'au moins un premier rail (51) de guidage axial, le bâti (2) est solidaire d'au moins un deuxième rail (52) de guidage axial, au moins un rouleau (53) de roulement étant monté entre le premier rail (51) et le deuxième rail (52) pour permettre la translation du premier rail (51) par rapport au deuxième rail (52) selon l'axe.

Suivant un mode de réalisation, l'arbre (3) comporte au moins un premier conduit (33) ayant au moins une première extrémité (34) de sortie vers l'extérieur et au moins une deuxième extrémité se trouvant en communication avec un deuxième conduit (35) ménagé dans le coulisseau (5), le deuxième conduit (35) étant apte à être mis en communication avec une première canalisation d'amenée d'un premier fluide de refroidissement.

Suivant un mode de réalisation, le coulisseau (5) comporte un troisième conduit (36) comportant au moins une troisième partie d'extrémité (361) d'entrée de fluide, apte à être mise en communication avec au moins une deuxième canalisation d'amenée d'un deuxième fluide de refroidissement, et au moins une quatrième extrémité (362) de sortie de fluide apte à être mise en communication avec au moins une troisième canalisation d'évacuation du deuxième fluide de refroidissement.

Suivant un mode de réalisation, la tête comporte au moins un capteur (11) de mesure, permettant de déterminer la force exercée sur le coulisseau (5).

Suivant un mode de réalisation, la tête comporte au moins un capteur (11) de mesure de distance, permettant de déterminer la position du coulisseau (5) par rapport au bâti (2) et donc la force exercée sur le coulisseau (5) en connaissant la raideur de l'élément élastique (9).

Suivant un mode de réalisation, la tête comporte au moins un organe (12) de verrouillage et de déverrouillage du coulisseau (5) par rapport au bâti (2) en translation selon l'axe.

Suivant un mode de réalisation, la tête comporte au moins un capteur de température permettant de surveiller la température d'échauffement de la tête lors du soudage.

Suivant un mode de réalisation, la pièce (6) d'accouplement et l'arbre (3) sont solidaires l'un de l'autre et/ou sont solidaires en rotation l'un de l'autre et/ou sont d'une seule pièce et/ou sont fixés l'un à l'autre.

Suivant un mode de réalisation, le porte-outil (4) et l'arbre (3) sont d'une seule pièce.

L'invention sera mieux comprise à la lecture de la description qui va suivre, donnée uniquement à titre d'exemple non limitatif, en référence aux dessins annexés, sur lesquels :
- la figure 1 est une vue schématique en perspective de face d'une tête de soudage suivant un mode de réalisation de l'invention,
- la figure 2 est une vue schématique en perspective de l'arrière de la tête de soudage un mode de réalisation de l'invention,
- les figures 3 et 5 sont des vues schématiques de face et de droite de la tête de soudage suivant un mode de réalisation de l'invention,
- les figures 4 et 6 sont des vues en coupe axiale respectivement de côté et de face de la tête de soudage suivant un mode de réalisation de l'invention,
- la figure 7 est une vue schématique de l'arrière de la tête de soudage suivant un mode de réalisation de l'invention,
- la figure 8 est une vue schématique en perspective éclatée d'un organe d'accouplement mécanique et d'absorption des vibrations, faisant partie de la tête de soudage suivant un mode de réalisation de l'invention,
- la figure 9 est une vue de dessous de la tête de soudage suivant un mode de réalisation de l'invention,
- la figure 10 est une vue en coupe de dessous de la tête de soudage suivant un mode de réalisation de l'invention,
- la figure 11 est une vue schématique en perspective d'un organe de verrouillage et de déverrouillage de la fonction adaptation (en anglais : « compliance ») de la tête de soudage suivant un mode de réalisation de l'invention,
- la figure 12 est une vue schématique en coupe axiale de la tête de soudage dans une première position basse suivant un mode de réalisation de l'invention, et
- la figure 13 est une vue schématique en coupe axiale de la tête de soudage dans une deuxième position haute, suivant un mode de réalisation de l'invention,
- la figure 14 est une vue schématique en perspective d'une soudure effectuée par un outil de soudage par friction malaxage à l'aide de la tête suivant l'invention,

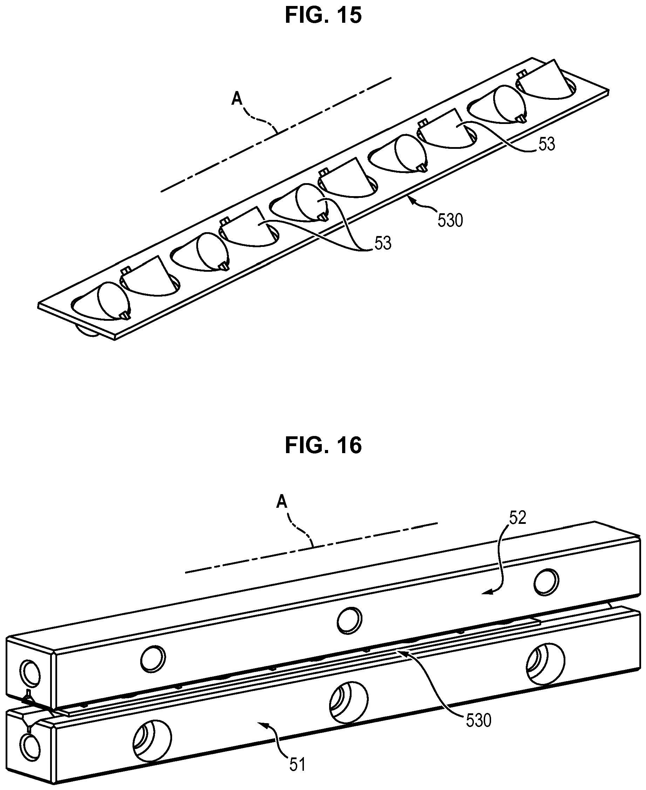

- les figures 15 et 16 sont des vues schématiques en perspective d'un système de guidage de la tête suivant un mode de réalisation de l'invention.

Aux figures, la tête de soudage par friction malaxage suivant l'invention comporte un bâti extérieur 2, destiné à être fixé à un châssis C de la machine M. Cette machine M peut être une machine-outil, par exemple une machine-outil à commande numérique. Dans le cas d'une machine-outil, la broche B peut être appelée nez de broche. La machine M comporte une broche B d'entraînement, qui est montée rotative autour d'un axe A par rapport au châssis C. Dans ce qui suit, l'axe et le terme axial sont pris en référence à cet axe A de rotation de la broche B. Un premier sens A1 de l'axe A, symboliquement indiqué du haut vers le bas aux figures, va de la pièce 7 d'entraînement de la tête 1 à l'arbre 3 de la tête 1, tandis qu'un deuxième sens A2 de l'axe A, inverse du premier sens A1 et symboliquement indiqué du bas vers le haut aux figures, va de l'arbre 3 à la pièce 7 d'entraînement.

La tête 1 comporte l'arbre 3, sur lequel doit être monté un outil O de soudage par friction malaxage. A cet effet, l'outil O est par exemple fixé à un porte-outil 4, lui-même fixé à l'arbre 3. Le porte-outil 4 peut-être d'une seule pièce avec l'arbre 3. L'outil O peut être d'une seule pièce avec le porte-outil 4.

L'outil O de soudage par friction malaxage comporte par exemple un pion d'extrémité OE fixé par l'intermédiaire d'un épaulement OP transversal à l'axe A à une partie supérieure OS fixée au porte-outil 4. Par exemple, le porte-outil 4 comporte un évidement central 41 de logement de l'extrémité supérieure OS2 de la partie OS de l'outil O, par des moyens de fixation, par exemple par vissage ou autre. Par exemple, l'arbre 3 comporte à son extrémité basse selon le sens A1, un autre évidement central 42 de logement de l'extrémité supérieure 43 du porte-outil 4, par des moyens de fixation, par exemple par vissage ou autre.

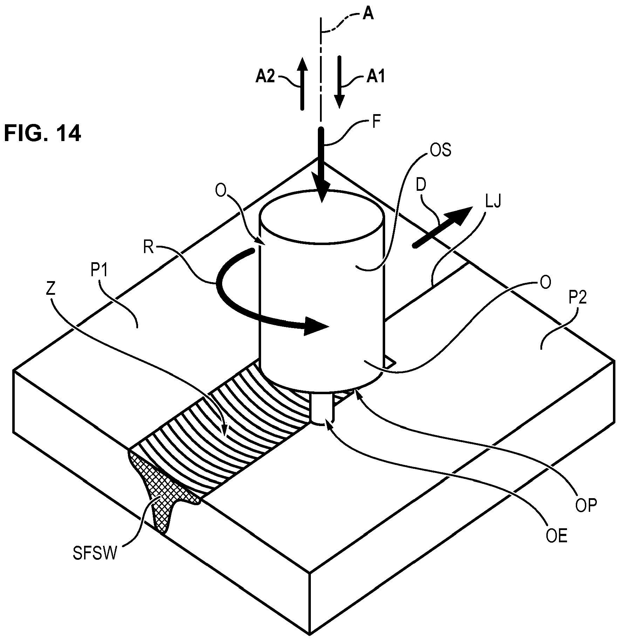

Ainsi que représenté à la figure 14, le soudage par friction malaxage (en anglais FSW pour « Friction Stir Welding ») est effectué par mise en rotation de l'outil O autour de l'axe A (selon la flèche R), pour faire pénétrer le pion OE dans les au moins deux pièces à souder P1 et P2, jusqu'à faire buter l'épaulement OP contre ces pièces P1 et P2, puis déplacement de l'outil O selon une trajectoire prescrite D le long d'une ligne de joint LJ pour réaliser la soudure SFSW par friction malaxage. La pièce P1 peut être placée en dessous de la pièce P2 afin de réaliser une soudure par transparence, l'outil traversant totalement ou partiellement P1. La vitesse de rotation de la broche B et donc de l'outil O peut être comprise entre 500 et 10 000 tours/minute. La rotation de l'outil O crée donc une zone Z de malaxage de la matière des pièces P1 et P2. Le soudage par friction malaxage nécessite un mouvement de rotation R, un mouvement D d'avance et un effort F de forge. Selon les applications, épaisseurs, matériaux, cet effort F de forge peut être compris entre 1 kN et plus de 50 kN. Les trois paramètres principaux du soudage par friction malaxage sont la vitesse de rotation selon R, la vitesse d'avance selon D et l'effort de forge F.

Suivant l'invention, l'arbre 3 est monté rotatif autour de l'axe A dans un coulisseau 5.

Le coulisseau 5 est guidé en translation selon l'axe A dans le bâti 2. Le coulisseau 5 peut être en liaison glissière par rapport au boitier extérieur.

La tête 1 comporte une pièce 7 d'entraînement, destinée à être entraînée par la broche B d'entraînement de la machine M, par exemple en étant accouplée à la broche B d'entraînement de la machine M. La broche B peut comporter à cet effet des moyens de fixation pour fixer la broche B à la pièce 7 d'entraînement. La tête 1 comporte en outre au moins une pièce 6 d'accouplement, qui est guidée en translation selon l'axe A sur la pièce 7 d'entraînement. La pièce 6 d'accouplement comporte des premiers organes 61 d'accouplement. La pièce 7 d'entraînement comporte des deuxièmes organes 71 d'accouplement en rotation avec les premiers organes 61 d'accouplement autour de l'axe A, pour entraîner en rotation la pièce 6 d'accouplement à partir de la rotation de la pièce 7 d'entraînement autour de l'axe A. Les organes 61 et 71 peuvent comporter tout élément mécanique permettant de transmettre un couple de rotation de la pièce 7 d'entraînement à la pièce 6 d'accouplement. Dans un mode de réalisation, les premier et deuxième organes 61, 71 d'accouplement comportent respectivement des premières et deuxième cannelures s'étendant selon l'axe A. Les cannelures ou organes 61, 71 sont aptes à guider en translation selon l'axe A la pièce 6 d'accouplement par rapport à la pièce 7 d'entraînement. Les première et deuxième cannelures engrènent l'une avec l'autre autour de l'axe A pour entraîner en rotation la pièce 6 d'accouplement à partir de la rotation de la pièce 7 d'entraînement. La translation entre la pièce 7 et l'ensemble O,4,3,8,6 étant libre, aucun effort axial n'est transmis aux éléments sensibles de la broche via la pièce 7. Dans un autre mode de réalisation, les premiers et deuxièmes organes 61, 71 d'accouplement comportent des clavettes ou tout élément mécanique permettant de transmettre un couple de rotation.

Suivant un mode de réalisation, la tête 1 comporte au moins un organe 8 d'accouplement et d'absorption des vibrations, qui est interposé entre la pièce 6 d'accouplement et l'arbre 3. L'organe 8 permet d'absorber les vibrations résultant du soudage et de transmettre le couple entre les flasques 6 et 3.

Bien entendu, la tête peut ne pas comporter cet organe 8 d'absorption des vibrations, et/ou peut ne pas comporter les éléments 62, 32 décrits ci-dessous. Dans ce cas, par exemple, suivant un mode de réalisation, la pièce (6) d'accouplement et l'arbre (3) sont solidaires l'un de l'autre et/ou sont solidaires en rotation l'un de l'autre et/ou sont d'une seule pièce et/ou sont fixés l'un à l'autre.

On décrit ci-dessous plus en détail le mode de réalisation représenté aux figures, où cet organe 8 d'absorption des vibrations est présent.

Par exemple, l'organe 8 d'absorption des vibrations peut être en un matériau souple, par exemple en élastomère, comme par exemple en caoutchouc ou autre. L'organe 8 d'absorption des vibrations est monté, de telle sorte que l'arbre 3 ne touche pas la pièce 6 d'accouplement. L'organe 8 d'absorption des vibrations mécaniques est donc un organe 8 de maintien à distance de la pièce 6 d'accouplement par rapport à l'arbre 3. En revanche, l'organe 8 d'absorption des vibrations est agencé pour permettre la transmission du couple de rotation de la pièce 6 d'accouplement à l'arbre 3 autour de l'axe A. L'organe 8 est par exemple formé par un accouplement souple et isole la broche par apport à l'arbre 3 qui encaisse les efforts et vibrations.

A cet effet, la pièce 6 d'accouplement comporte des troisièmes organes 62 d'accouplement et l'arbre 3 comporte des quatrièmes organes 32 d'accouplement en rotation avec ces troisièmes organes 62 d'accouplement par l'intermédiaire de l'organe 8 d'absorption des vibrations autour de l'axe A, pour entraîner en rotation l'arbre 3 à partir de la rotation de la pièce 6 d'accouplement.

Les organes 62, 32 d'accouplement et l'organe 8 ont pour propriétés l'absorption des vibrations, et sont des éléments constituant une transmission de couple en permettant une absorption des vibrations.

Les troisièmes organes 62 d'accouplement sont par exemple prévus sur une extrémité basse de la pièce 6.

Les quatrièmes organes 32 d'accouplement sont par exemple prévus sur une partie centrale de l'arbre 3, éloignée de l'outil O et du porte-outil 4.

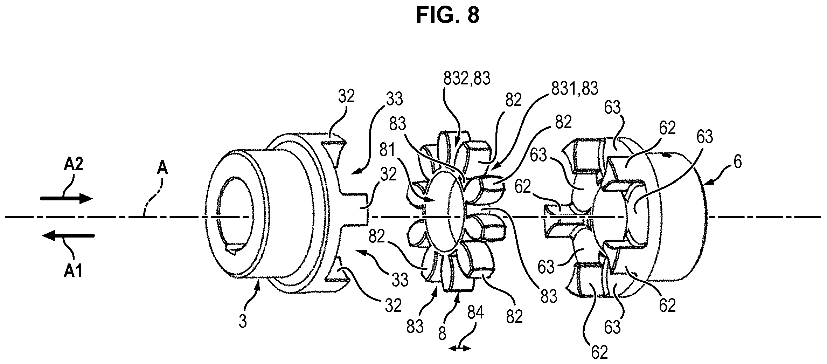

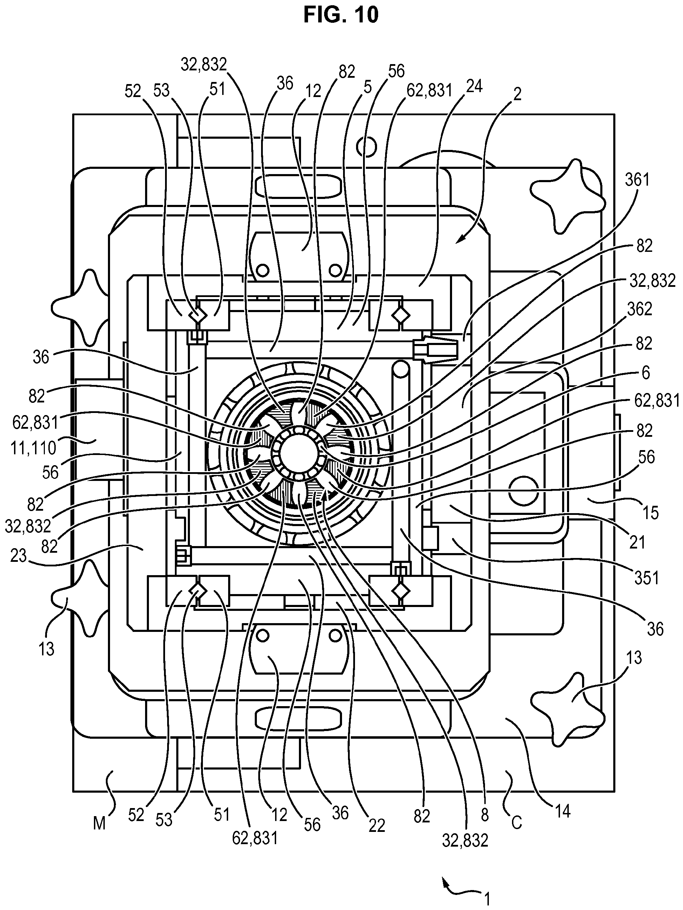

Un mode de réalisation de cet organe 8 est représenté plus en détail aux figures 8 et 10.

Les troisièmes organes 62 d'accouplement sont par exemple des troisièmes dents 62 faisant saillie dans le premier sens A1 et réparties autour de l'axe A. Les quatrièmes organes 32 d'accouplement sont par exemple des quatrièmes dents 32 faisant saillie dans le deuxième sens A2 et réparties autour de l'axe A.

Dans un mode de réalisation, l'organe 8 d'absorption des vibrations comporte un anneau 81 sur la périphérie duquel sont fixées des pattes 82 distantes l'une de l'autre autour de l'axe A. Entre les pattes 82 se trouve des intervalles 83 permettant chacune le passage d'une des troisièmes dents 62 (cet intervalle 83 étant alors un intervalle 831) ou d'une des quatrièmes dents 32 (cet intervalle 83 étant alors un intervalle 832). Ainsi, les dents 62 sont insérées dans des premiers intervalles 831 différents des deuxièmes intervalles 832 dans lesquels sont insérés les dents 32 d'accouplement, par exemple en alternant autour de l'axe A. Entre les dents 62 d'accouplement, la pièce 6 d'accouplement comporte des premiers évidements 63 dans chacun desquels sont insérées deux pattes 82 consécutives, et entre ces dernières une dent 32 d'accouplement. De même, entre les dents 32 d'accouplement, l'arbre 3 comporte des deuxièmes évidements 33, dans chacun desquels sont insérées deux pattes 82 consécutives, et entre ces dernières une dent 62 d'accouplement.

La longueur 84 des pattes 82 selon l'axe A est supérieure à la profondeur des évidements 63 et 33 selon cet axe A. On empêche ainsi que les dents 62 d'accouplement touchent l'arbre 3 et que les dents 32 d'accouplement touchent la pièce 6 d'accouplement. En revanche, la rotation des dents 62 d'accouplement autour de l'axe A entraîne la rotation des pattes 82 situées dans les évidements 63 et la rotation des dents 32 d'accouplement insérés entre les pattes 82 dans l'évidement 63 autour de l'axe A. Ainsi, les troisième et quatrième dents 62, 32 engrènent les unes avec les autres autour de l'axe A par l'intermédiaire de l'organe 8 d'absorption.

La tête 1 de soudage comporte en outre des moyens de guidage de son coulisseau 5 selon l'axe A.

La tête 1 de soudage comporte au moins un élément élastique 9 de report des efforts axiaux, qui est interposé entre le coulisseau 5 et le bâti 2. Suivant un mode de réalisation, il est prévu plusieurs éléments 9 élastiques répartis autour de l'axe A. L'élément élastique 9 comporte par exemple au moins un ressort 91 de compression, par exemple plusieurs ressorts 91 de compression répartis autour de l'axe A. Ce ou ces éléments 9 forment un système d'adaptation aux variations de distance entre la broche B et les pièces P1, P2 selon l'axe A.

Ainsi, lorsque, pour réaliser le soudage par friction malaxage, on fait tourner par le moteur de la machine M la broche B, la broche B entraîne en rotation autour de l'axe A la pièce 7 d'entraînement, laquelle entraîne en rotation la pièce 6 d'accouplement, laquelle à son tour entraîne en rotation l'arbre 3 et donc l'outil O autour de l'axe A. Lorsque la tête 1, par l'intermédiaire de l'abaissement du châssis C, est abaissée vers les pièces à souder, les vibrations remontant de l'outil O vers l'arbre 3 selon l'axe A sont amorties par l'organe 8 intermédiaire d'absorption de vibrations lorsque celui-ci est présent et ne sont donc pas ou très peu transmises à la pièce 6 d'accouplement. En outre, la liberté de translation axiale de la pièce 6 d'accouplement par rapport à la pièce 7 d'entraînement empêche également la transmission des efforts axiaux à cette dernière fixée à la broche B de la machine M. Ces efforts axiaux sont transmis de l'arbre 3 au coulisseau 5, puis du coulisseau 5 à l'élément élastique 9, lequel absorbe ces efforts axiaux, qui sont alors reportés sur le bâti 2 et donc le châssis C. On protège ainsi la broche B de la machine M vis-à-vis des efforts axiaux de forgeage, et également des efforts transversaux de forgeage pouvant être dus au déplacement de l'outil O transversalement à l'axe A selon le déplacement D. La tête 1 procure ainsi une sécurité vis-à-vis des broches C et dispose d'un contrôle d'effort, c'est-à-dire un système permettant de garder un effort de forge dans un intervalle largement acceptable pour la qualité des soudures malgré les défauts géométriques des pièces, par exemples causés par des surfaces brutes.

Suivant un mode de réalisation, l'arbre 3 est monté tournant dans le coulisseau 5 par l'intermédiaire d'un ou plusieurs roulements 10 autour de l'axe A, ce roulement 10 pouvant être par exemple un roulement 10 à billes ou autre.

Le bâti 2 comporte des parois extérieures 21, 22, 23, 24, par exemple planes autour de l'axe A, qui forment un boîtier extérieur délimitant un espace dans lequel se trouve le coulisseau 5. Le coulisseau 5 comporte un espace intérieur 50 dans lequel se trouvent l'arbre 3, l'organe 8, la pièce 6 et la pièce 7. La pièce 6 d'accouplement est par exemple guidée en translation entre la pièce 7 centrale et une gaine 38 de l'arbre 3, située à une extrémité supérieure de ce dernier. L'organe 8 est logé par exemple au fond de la gaine 38.

Suivant un mode de réalisation, il est prévu un système de guidage linéaire du coulisseau 5 par rapport au bâti 2 selon l'axe A.

Suivant un mode de réalisation, le coulisseau 5 est solidaire d'au moins un premier rail 51 de guidage axial. Le bâti 2 est solidaire d'au moins un deuxième rail 52 de guidage axial. Au moins une cage 530 à rouleaux 53 de roulement est montée entre le premier rail 51 et le deuxième rail 52 pour permettre la translation du premier rail 51 par rapport au deuxième rail 52 selon l'axe A. Les rouleaux 53 sont logés dans une cage 530 située entre les rails 51 et 52. Par exemple, les rails 51 et 52 s'étendent parallèlement à l'axe A. Le rouleau 53 a par exemple un axe de rotation en oblique par rapport aux parois 21, 22, 23, 24 et est situé dans un plan transversal à l'axe A. Il peut être prévu au moins deux jeux de rails 51, rails 52 et rouleau 53, par exemple quatre à proximité des coins du bâti 2 et du coulisseau 5.

L'élément élastique 9 peut comporter au moins un ressort de compression et/ou au moins une rondelle élastique (dite belleville) ou tout élément mécanique élastique.

On décrit ci-dessous l'exemple d'un ressort 91 de compression.

Chaque ressort 91 de compression peut être par exemple un ressort hélicoïdal s'étendant suivant une direction parallèle à l'axe A entre une première extrémité 92 d'appui contre une butée 54 du coulisseau 5 et une deuxième extrémité 93 en appui contre une deuxième butée 25 du bâti 2. Le coulisseau 5 peut comporter autour de la butée 54 une paroi extérieure 55 de calage du ressort 91 ou élément 9. De même, la butée 25 peut comporter une paroi intérieure 26 de calage du ressort 91 ou de l'élément 9. Les parois 55 et 26 s'étendent par exemple selon l'axe A. Le ressort 91 est donc calé entre les butées 54 et 25 et entre les parois 55 et 26. La ou les butée(s) inférieure(s) 54 se prolongent par une paroi principale 56 du coulisseau 5, qui s'étend selon l'axe A autour de celui-ci et dont une partie inférieure 57 porte le roulement 10. Les parois 56 sont par exemple planes autour de l'axe A, par exemple quatre parois 56 planes, parallèles aux parois 21, 22, 23, 24. Le rail 51 est fixé sur la surface extérieure de cette paroi principale 56. Les rails 51 et 52 permettent de maintenir le coulisseau 5 à distance des parois 21, 22, 23, 24 du bâti 2.

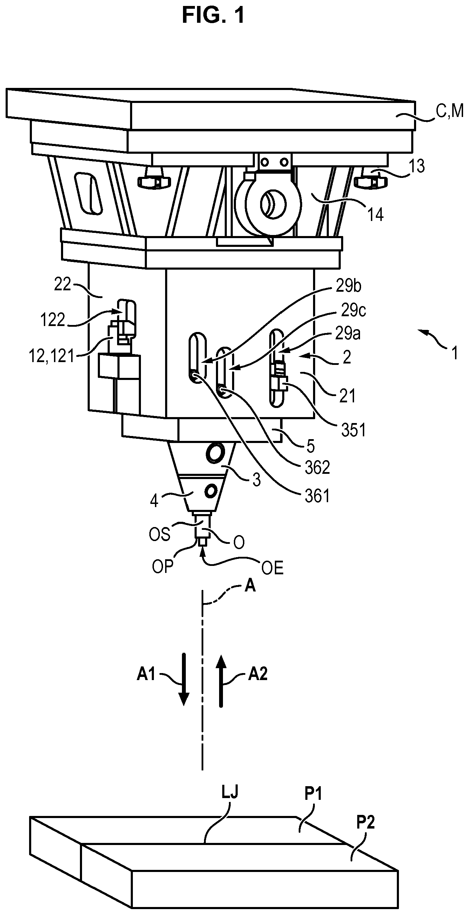

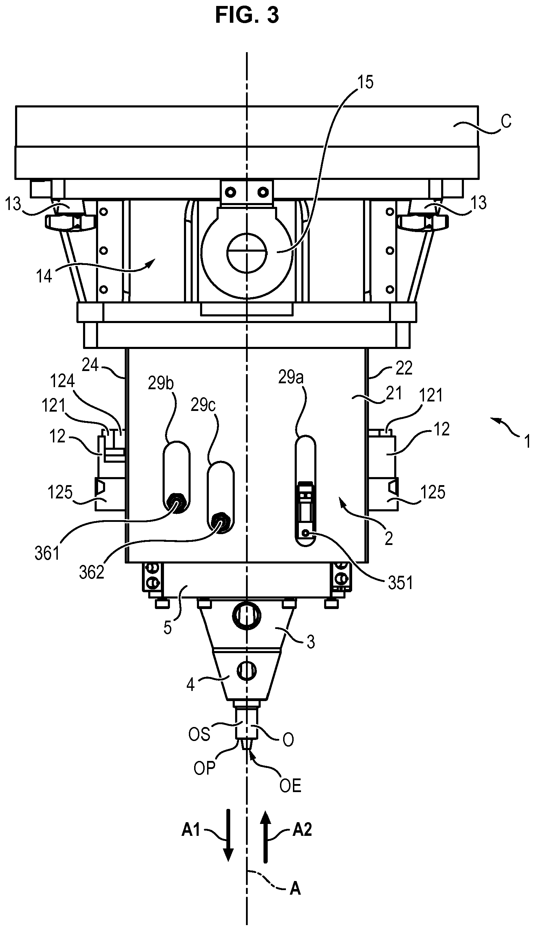

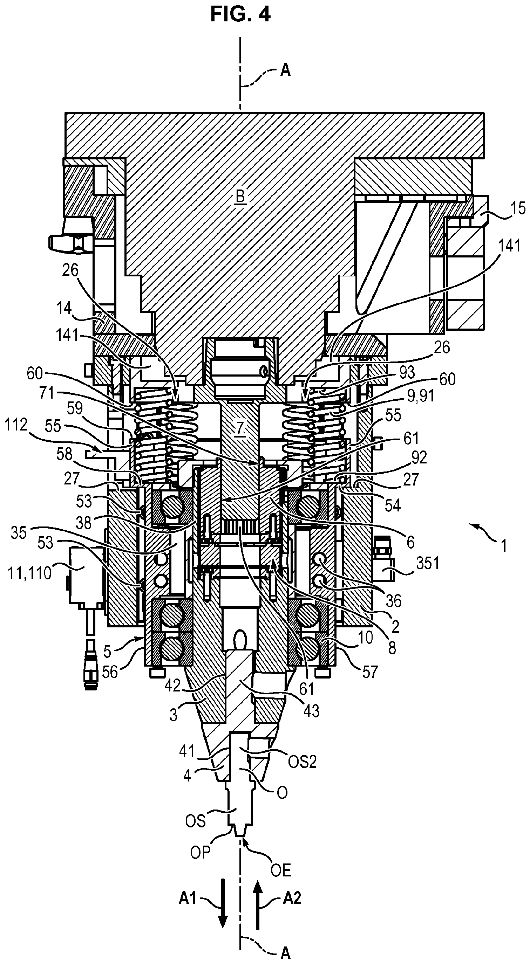

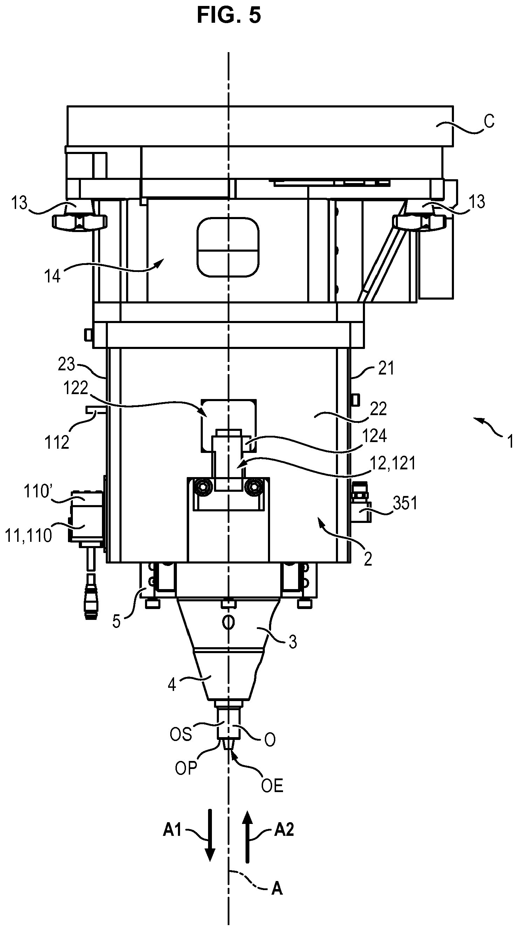

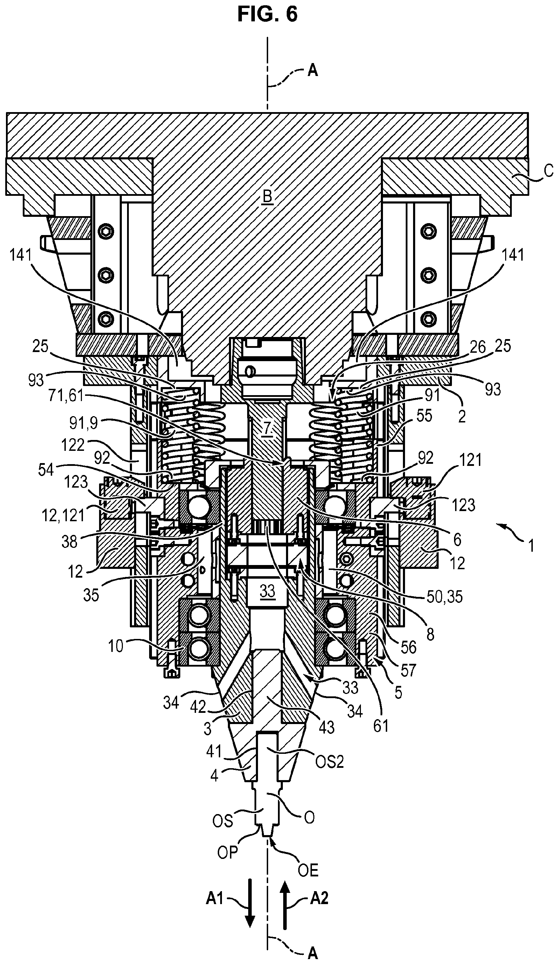

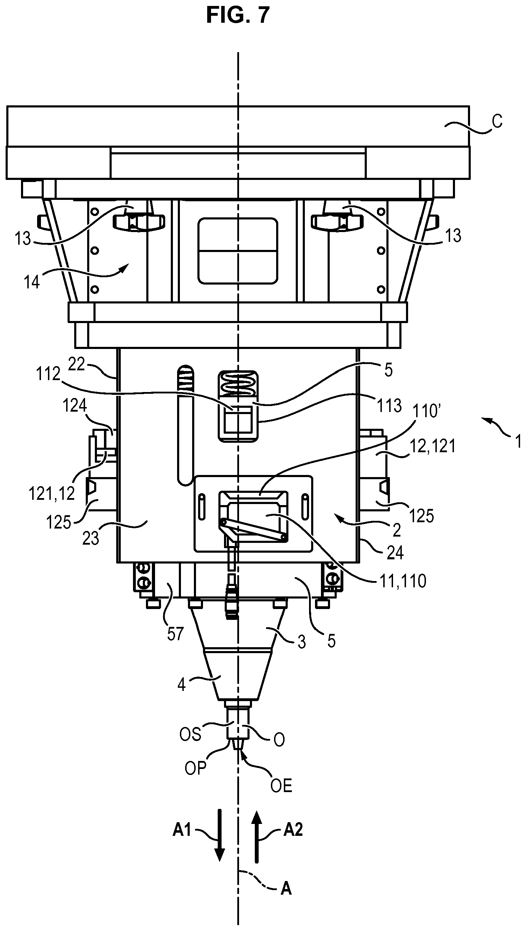

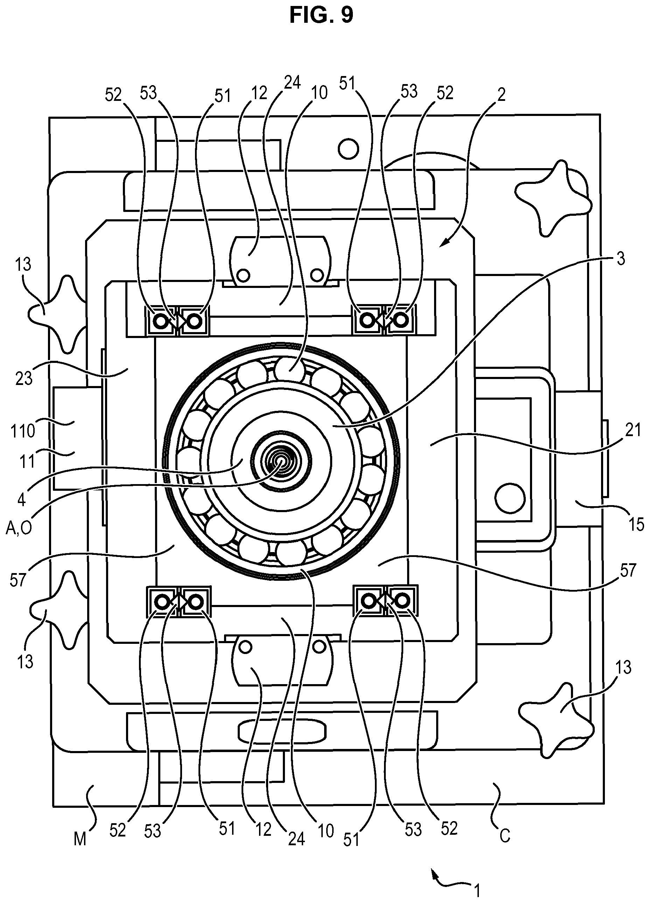

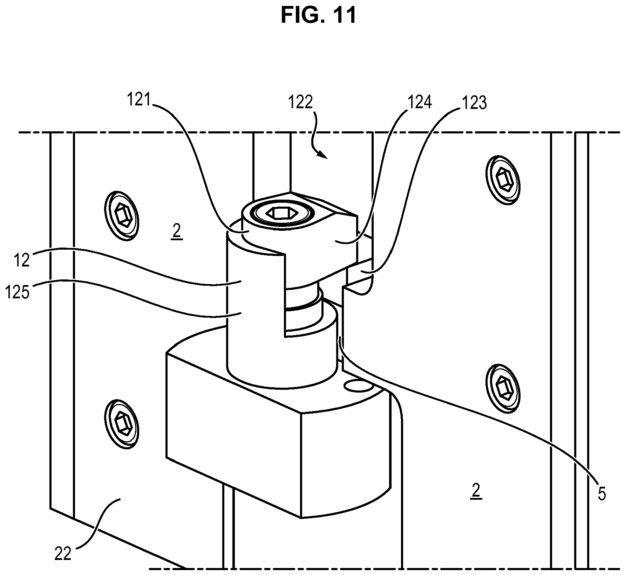

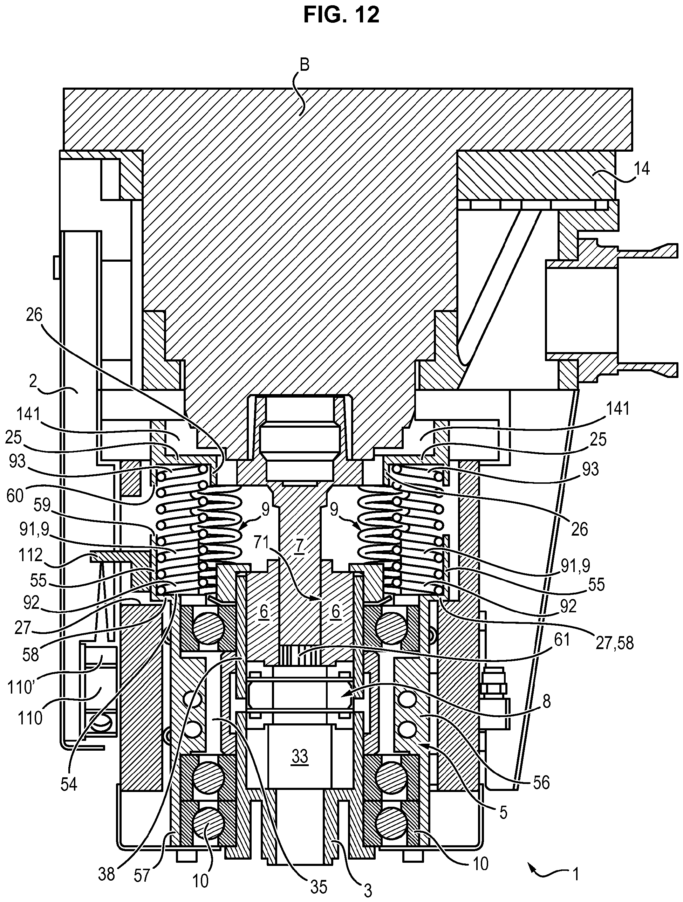

Le bâti 2 comporte une butée 27 d'arrêt pour arrêter une saillie correspondante 58 du coulisseau 5 dans le sens de la translation selon le sens A1 de descente par rapport au bâti 2, cette saillie 58 pouvant par exemple être formée par le dos de la butée 54. La position d'arrêt de la saillie 58 contre la butée 27 du bâti 2 dans le premier sens A1 de descente du coulisseau 5 correspond par exemple à la longueur à vide du ou des ressort(s) 91 (c'est-à-dire ressort ni comprimé, ni tendu, ainsi que cela est représenté à titre d'exemple aux figures 1 à 12).

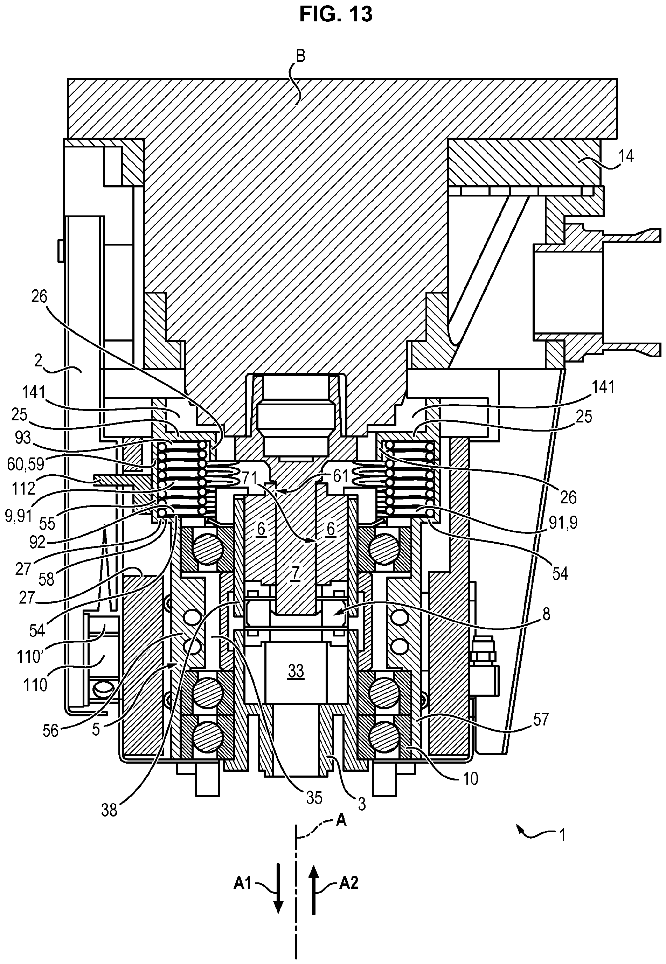

En revanche, lorsque la tête 1 est abaissée contre les pièces à souder et que l'outil O appuie sur ces pièces à souder, le coulisseau 5 remonte selon le deuxième sens A2 de l'axe A dans le bâti 2 pour comprimer le ou les élément(s) élastique(s) 9, à savoir par exemple le ou les ressort(s) 91 ou une ou des rondelles élastiques (dites belleville) ou tout élément mécanique élastique et éloigner la saillie 58 de la butée 27, le coulisseau 5 étant guidé dans le bâti 2 ainsi que décrit ci-dessus, pour arriver par exemple à une position haute représentée à la figure 13. Le coulisseau 5 peut comporter une autre butée 59, par exemple prévue à l'extrémité supérieure de la paroi 55, qui est arrêtée contre une autre butée 60 du bâti 2 dans la position haute du coulisseau 5 dans le bâti 2. Par conséquent, selon la force appliquée sur le coulisseau 5, le coulisseau 5 peut coulisser entre l'une et l'autre de la première position basse des figures 1 à 12 et de la deuxième position haute de la figure 13. L'élévation du coulisseau 5 à partir de sa position basse des figures 1 à 12 comprime le ou les ressort(s) 91 ou une ou des rondelles élastique (dites belleville) ou tout élément mécanique élastique. Par conséquent, la paroi 55 du coulisseau 5 est mobile entre l'une et l'autre de la butée inférieure 27 du bâti 2 et de la butée supérieure 60 du bâti 2 correspondant respectivement à la position basse et à la position haute. La translation du coulisseau 5 dans le sens A2 ou A1 s'accompagne d'une translation de la même longueur de l'ensemble outil O, porte-outil 4, arbre 3, organe 8, pièce 6 d'accouplement et donc de la translation de la pièce 6 le long de la pièce 7 d'entraînement de cette même longueur.

Suivant un mode de réalisation, l'arbre 3 comporte au moins un premier conduit 33 ayant au moins une première extrémité 34 de sortie vers l'extérieur et au moins une deuxième extrémité se trouvant en communication avec un deuxième conduit 35 ménagé dans le coulisseau 5. Le deuxième conduit 35 est apte à être mis en communication avec une première canalisation d'amenée d'un premier fluide de refroidissement. Par exemple, le deuxième conduit 35 comporte une partie extérieure 351 saillante, traversant un trou oblong 29 du bâti 2, par exemple dans sa paroi 21, cette partie 351 étant apte à être mise en communication avec la première canalisation. Ce premier fluide de refroidissement peut être par exemple de l'air, par exemple de l'air comprimé provenant d'une source d'air comprimé, reliée à la première canalisation.

Suivant un mode de réalisation, le coulisseau 5 comporte un troisième conduit 36 comportant au moins une troisième partie 361 d'extrémité d'entrée de fluide, apte à être mise en communication avec au moins une deuxième canalisation d'amenée d'un deuxième fluide de refroidissement, et au moins une quatrième extrémité 362 de sorte de fluide, apte à être mise en communication avec au moins une troisième canalisation d'évacuation du deuxième fluide de refroidissement. Ce deuxième fluide de refroidissement peut être par exemple de l'eau. Les deuxième et troisième canalisations peuvent être reliées à un circuit de refroidissement comportant une source de deuxième fluide de refroidissement pour envoyer et recevoir ce deuxième fluide dans les parties 361 et 362. Le conduit 36 peut être par exemple prévu dans le coulisseau 5 autour de l'axe A, en étant par exemple dans les parois principales 56 autour de l'arbre 3 et/ou autour de l'organe 8 et/ou autour de la pièce 6. A la figure 10, le conduit 36 peut comporter un ou plusieurs tronçon(s) rectiligne(s). La partie 361 d'extrémité fait par exemple saillie vers l'extérieur de la paroi principale 56 du coulisseau 5 et passe dans un trou oblong 29b ménagé dans le bâti 2, par exemple dans sa paroi 21. La partie 362 d'extrémité fait par exemple saillie vers l'extérieur de la paroi principale 56 du coulisseau 5 et passe dans un trou oblong 29c ménagé dans le bâti 2, par exemple dans sa paroi 21.

Suivant un mode de réalisation, la tête 1 comporte au moins un capteur de température, comportant par exemple un câble de thermocouple, guidé par exemple au niveau du roulement 10. Ce capteur de température permet de surveiller la température d'échauffement de l'arbre 3 lors du soudage. Suivant un mode de réalisation, le câble du capteur de température descend dans l'espace entre le coulisseau 5 et le bâti 2, passe dans un perçage du coulisseau 5 et est fixé par une extrémité contre l'extérieur du roulement 10 en traversant le coulisseau. L'autre extrémité du câble du capteur de température passe dans le conduit d'accastillage 15 pour être connecté à l'extérieur de la tête 1.

Suivant un mode de réalisation, la tête 1 comporte au moins un capteur 11 de mesure, permettant de déterminer la force exercée sur le coulisseau 5. Le capteur 11 de mesure peut comporter un capteur 110 de mesure de la longueur du ressort 91 ou d'un des ressorts 91 entre ses extrémités 92 et 93, ce qui permet de calculer, à partir de cette longueur mesurée, la force exercée sur ce ressort 91, en connaissant la valeur de la constante de raideur du ressort 91.

Le capteur 110 de mesure peut, dans le mode de réalisation représenté aux figures, comporter un capteur de mesure 110' mesurant sa distance par rapport à une cible 112 fixée au coulisseau 5, le capteur 110' étant fixé au bâti 2. Ce capteur de mesure 110' peut être par exemple un capteur laser de mesure, mais peut-être autre. Par exemple, le capteur 110' est fixé sur la surface extérieure du bâti 2, par exemple sur sa paroi 23, tandis que la cible 112 peut être formée par une pièce saillante, fixée au coulisseau 5, par exemple à sa paroi 55, cette pièce saillante 112 traversant un trou oblong 113 ménagé dans le bâti 2.

Suivant un mode de réalisation, la tête 1 comporte au moins un organe 12 de verrouillage et de déverrouillage du coulisseau 5 par rapport au bâti 2 en translation selon l'axe A. Lorsque la tête 1 est utilisée avec un outil O de soudage par friction malaxage, l'organe 12 de verrouillage et de déverrouillage est maintenu dans une première position de déverrouillage, qui laisse le coulisseau 5 libre de translater selon l'axe A par rapport au bâti 2 dans les sens A1 et A2, ainsi que représenté aux figures 1, 3, 4, 5, 7, 9, 10, 12 et 13. Ce verrouillage et déverrouillage peut s'avérer utile pour faire des opérations simples d'usinage sans démonter la tête. Il est en effet possible de monter des outils d'usinage sur la pièce (4), et en bloquant la translation du coulisseau 5, d'effectuer des opérations d'usinage avec la tête montée.

Bien entendu, l'organe 12 de verrouillage et de déverrouillage du coulisseau 5 par rapport au bâti 2 en translation selon l'axe A peut être absent.

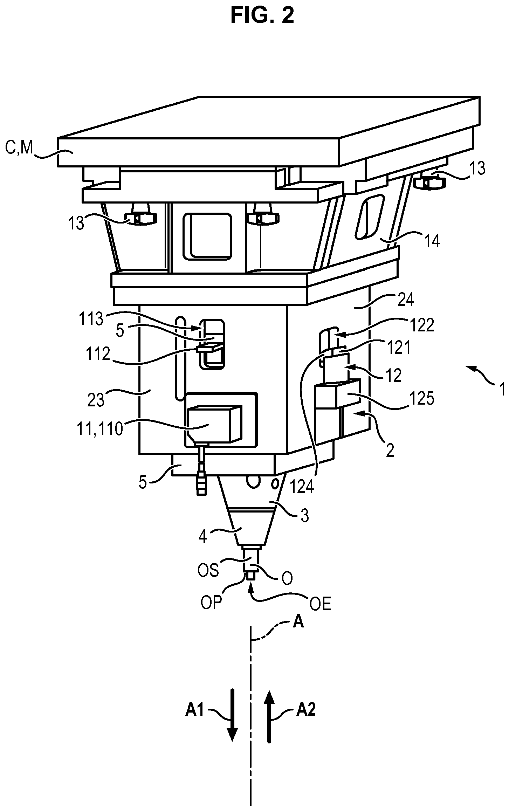

On décrit ci-dessous un mode de réalisation de l'organe 12 de de verrouillage et de déverrouillage, lorsqu'il est présent. L'organe 12 est apte à être actionné pour passer à une deuxième position de verrouillage, qui bloque le coulisseau 5 par rapport au bâti 2, ainsi que représenté aux figures 2, 6 et 11. A cet effet, l'organe 12 de verrouillage peut être porté par le bâti 2 sur sa surface extérieure, par exemple sur chacune des parois 22 et 24, et peut comporter un bouton 121, monté rotatif dans une embase 125 fixée au bâti 2. Le bouton 121 est solidaire d'un ergot 124 d'extrémité, qui, dans la deuxième position de verrouillage, rentre dans une ouverture 122 du bâti 2 pour venir contre une saillie 123 solidaire du coulisseau 5 afin d'empêcher celui-ci de monter dans le sens A2 à partir de la position basse. Le coulisseau 5 et donc la tête 1 sont ainsi bloqués dans la position basse dans la deuxième position de verrouillage. Cette deuxième position de verrouillage permet d'utiliser un outil autre qu'un outil O de soudage par friction malaxage sur l'arbre 3 et ne nécessitant pas de translation axiale par rapport à la broche B, sans avoir à démonter l'ensemble de la tête 1 pour changer d'outil. L'organe 12 est apte à être actionné pour passer de la deuxième position de déverrouillage à la première position de déverrouillage.

Dans la première position de déverrouillage, l'ergot 124 est sorti de l'ouverture 122 et n'est plus axialement en face de la saillie 123, ce qui permet à la saillie 123 de se déplacer axialement dans l'ouverture 122. On peut faire passer l'ergot 124 entre l'une et l'autre de la première position de verrouillage et de la deuxième position de verrouillage en faisant tourner le bouton 121 dans son embase 125.

Les parois 21, 22, 23, 24 sont fixées à une partie haute 14 du bâti 2, qui est celle devant être fixée sur le châssis C de la machine M, par exemple à l'aide d'un boulonnage 13, pouvant comporter des manettes actionnables manuellement pour serrer et desserrer cette partie 14 contre le châssis C. Cette partie haute est une pièce rigide permettant la transmission des efforts sur le châssis C. La partie haute 14 peut comporter un dispositif 141 de centrage sur l'extérieur du nez de broche 14.

Cette partie haute 14 comporte un conduit d'accastillage 15 permettant le passage de câbles d'instrumentation, par exemple pour le ou les capteur(s), par exemple dans une ou plusieurs gaine(s). Les efforts axiaux sont donc reportés par le ou les élément(s) élastique(s) 9 sur le bâti 2 et sur sa partie haute 14 pour être transmis au châssis C sans passer par la broche B.

L'invention concerne également un procédé de soudage par friction malaxage de pièces P1, P2, dans lequel on utilise la tête 1 décrite ci-dessus.

Le contrôle d'effort peut intervenir pour maintenir l'effort F de forge dans un intervalle tolérable pour la bonne qualité de la soudure Cette condition est indispensable pour obtenir une bonne soudure. Dans la majeure partie des cas, les pièces P1 à P2 à souder présentent des défauts géométriques (même très faibles), qui pour une trajectoire D donnée, provoquent des fluctuations de la pénétration de l'outil donc des défauts dans la soudure SFSW.

L'invention permet à l'outil de soudage de suivre les défauts géométriques des pièces et de s'adapter à ceux-ci et ainsi de compenser en temps réel les écarts d'altitudes notamment entre la pièce référence (via laquelle on programme les trajectoires D) et la pièce réelle P1, P2. En présence de ces défauts géométriques, le ressort ou élément élastique 9 bouge légèrement, tandis que la machine-outil et le bâti 2 gardent leur trajectoire théorique. Le système mécanique suivant l'invention résout le problème précité en se dispensant de devoir implémenter une commande de position selon l'axe A dans les automates des centres d'usinage (machine-outil par exemple). Ce système est autonome, il compense mécaniquement les erreurs de trajectoires, grâce à l'élément 9 élastique de compensation des efforts axiaux. La raideur de l'élément 9 élastique est dimensionnée pour compenser les efforts axiaux et pour garantir la qualité de la soudure.

Dans un mode de réalisation, le coulisseau (5) est libre en translation par rapport au bâti (2) et à la pièce d'entrainement (7). Cette translation permet une adaptation (ou « compliance » en anglais) du système, régulée par un élément élastique (9) de report des efforts axiaux interposé entre le coulisseau (5) et le bâti (2). Ce bâti (2) est destiné à être fixé sur les machines-outils et donc à reporter les efforts impliqués par le soudage sur le châssis C. Les éléments élastiques (9) vont permettre au système de conserver un effort forge dans un intervalle tolérable, malgré les défauts géométriques des pièces, et donc garantir la bonne qualité des soudures. Le système peut être est équipé de circuits de refroidissement pour pallier à la chaleur généré par le soudage FSW. Le système peut être instrumenté pour avoir une lecture en temps réel de l'effort de forge, et de la température du système.

On peut équiper de la tête 1 des machines-outils à commande numérique robustes, mais aussi des machines plus petites ne supportant que de faibles efforts, en dimensionnant d'une manière correspondante la raideur de l'élément 9 élastique de compensation des efforts axiaux selon l'épaisseur et les matériaux à souder.

Par exemple, la tête 1 permet de réaliser une soudure FSW par machine-outil sur des pièces en aluminium de 0 à 10 mm d'épaisseur, mais également des pièces en matériaux différents, par exemple aluminium / acier, cuivre / cuivre ou aluminium/cuivre.

Bien entendu, les modes de réalisation décrits ci-dessus peuvent être combinés l'un à l'autre.

## Revendications

1. Tête (1) de soudage par friction malaxage, destinée à être fixée sur une machine pour réaliser un soudage par friction malaxage à l'aide d'un outil destiné à être fixé à un porte-outil (4), faisant partie de la tête,
la tête comportant un bâti extérieur (2), destiné à être fixé à un châssis de la machine, une pièce (7) d'entraînement, destinée à être entrainée par une broche d'entrainement, qui fait partie de la machine et qui est montée rotative autour d'un axe par rapport au châssis, pour entraîner en rotation le porte-outil (4) autour de l'axe par mise en rotation de la pièce (7) d'entraînement,
**caractérisée en ce que** le porte-outil (4) est fixé à un arbre (3) monté rotatif autour de l'axe dans un coulisseau (5), lequel est guidé en translation selon l'axe dans le bâti (2),
au moins une pièce (6) d'accouplement étant guidée en translation selon l'axe sur la pièce (7) d'entraînement, la pièce (6) d'accouplement et la pièce (7) d'entraînement ayant respectivement des premiers et deuxièmes organes (61, 71) d'accouplement en rotation l'un avec l'autre autour de l'axe pour entraîner en rotation la pièce (6) d'accouplement à partir de la pièce (7) d'entraînement,
la pièce (6) d'accouplement et l'arbre (3) étant accouplés en rotation autour de l'axe pour entraîner en rotation l'arbre (3) à partir de la pièce (6) d'accouplement,
au moins un élément élastique (9) de report des efforts axiaux étant interposé entre le coulisseau (5) et le bâti (2).

2. Tête selon la revendication 1, **caractérisée en ce qu'**au moins un organe (8) souple d'absorption des vibrations est interposé entre la pièce (6) d'accouplement et l'arbre (3), la pièce (6) d'accouplement et l'arbre (3) ayant respectivement des troisièmes et quatrièmes organes (62, 32) d'accouplement en rotation par l'intermédiaire de l'organe souple (8) d'absorption autour de l'axe pour entraîner en rotation l'arbre (3) à partir de la pièce (6) d'accouplement.

3. Tête selon la revendication 2, **caractérisée en ce que** les troisièmes et quatrièmes organes (62, 32) d'accouplement en rotation comportent respectivement des troisièmes et quatrièmes dents (62, 32) engrenant les unes avec les autres autour de l'axe par l'intermédiaire de l'organe (8) d'absorption.

4. Tête selon la revendication 3, **caractérisée en ce que** l'organe (8) d'absorption des vibrations comporte une embase (81) sur la périphérie de laquelle sont fixées des pattes (82), qui délimitent entre elles autour de l'axe (A) des premiers et deuxièmes intervalles (831, 832) dans lesquels sont insérés respectivement les troisièmes dents (62) et les quatrièmes dents (32).

5. Tête selon l'une quelconque des revendications précédentes, **caractérisée en ce que** l'élément élastique (9) comporte au moins un ressort (91) de compression.

6. Tête selon l'une quelconque des revendications précédentes, **caractérisée en ce que** l'élément élastique (9) comporte au moins une rondelle élastique.

7. Tête selon l'une quelconque des revendications précédentes, **caractérisée en ce que** les premiers et deuxièmes organes (61, 71) d'accouplement comportent respectivement des premières et deuxièmes cannelures s'étendant selon l'axe, pour guider selon l'axe la pièce (6) d'accouplement par rapport à la pièce (7) d'entraînement, et engrenant l'une avec l'autre autour de l'axe pour entraîner en rotation la pièce (6) d'accouplement à partir de la pièce (7) d'entraînement.

8. Tête selon l'une quelconque des revendications précédentes, **caractérisée en ce que** le coulisseau (5) est solidaire d'au moins un premier rail (51) de guidage axial, le bâti (2) est solidaire d'au moins un deuxième rail (52) de guidage axial, au moins un rouleau (53) de roulement étant monté entre le premier rail (51) et le deuxième rail (52) pour permettre la translation du premier rail (51) par rapport au deuxième rail (52) selon l'axe.

9. Tête selon l'une quelconque des revendications précédentes, **caractérisée en ce que** l'arbre (3) comporte au moins un premier conduit (33) ayant au moins une première extrémité (34) de sortie vers l'extérieur et au moins une deuxième extrémité se trouvant en communication avec un deuxième conduit (35) ménagé dans le coulisseau (5), le deuxième conduit (35) étant apte à être mis en communication avec une première canalisation d'amenée d'un premier fluide de refroidissement.

10. Tête selon l'une quelconque des revendications précédentes, **caractérisée en ce que** le coulisseau (5) comporte une troisième conduit (36) comportant au moins une troisième partie d'extrémité (361) d'entrée de fluide, apte à être mise en communication avec au moins une deuxième canalisation d'amenée d'un deuxième fluide de refroidissement, et au moins une quatrième extrémité (362) de sortie de fluide apte à être mise en communication avec au moins une troisième canalisation d'évacuation du deuxième fluide de refroidissement.

11. Tête selon l'une quelconque des revendications précédentes, **caractérisée en ce qu'**elle comporte au moins un capteur (11) de mesure, permettant de déterminer la force exercée sur le coulisseau (5).

12. Tête selon l'une quelconque des revendications précédentes, **caractérisée en ce qu'**elle comporte au moins un organe (12) de verrouillage et de déverrouillage du coulisseau (5) par rapport au bâti (2) en translation selon l'axe.

13. Tête selon l'une quelconque des revendications précédentes, **caractérisée en ce qu'**elle comporte au moins un capteur de température permettant de surveiller la température d'échauffement de la tête.

14. Tête selon la revendication 1, **caractérisée en ce que** la pièce (6) d'accouplement et l'arbre (3) sont solidaires l'un de l'autre et/ou sont solidaires en rotation l'un de l'autre et/ou sont d'une seule pièce et/ou sont fixés l'un à l'autre.

15. Tête selon l'une quelconque des revendications précédentes, **caractérisée en ce que** le porte-outil (4) et l'arbre (3) sont d'une seule pièce.

## Patentansprüche

1. Kopf (1) zum Rührreibschweißen, der bestimmt ist für die Befestigung an einer Maschine für die Durchführung einer Rührreibschweißung mit einem Werkzeug, das dafür bestimmt ist, an einem Werkzeughalter (4) befestigt zu werden, der Teil des Kopfes ist,
wobei der Kopf einen äußeren Rahmen (2) der dafür bestimmt ist, an einem Gestell der Maschine befestigt zu werden, ein Antriebselement (7), das dafür bestimmt ist, durch eine Antriebsspindel angetrieben zu werden, die Teil der Maschine ist und hinsichtlich des Gestells um eine Achse drehbar gelagert ist, für den Drehantrieb des Werkzeughalters (4) um die Achse durch Drehen des Antriebselements (7) aufweist,
**dadurch gekennzeichnet, dass** der Werkzeughalter (4) an einer Welle (3) befestigt ist, die um die Achse drehbar in einem Gleitstück (5) montiert ist, welches entlang der Achse in dem Rahmen (2) translatorisch geführt wird,
wobei mindestens ein Kupplungselement (6) translatorisch entlang der Achse am Antriebselement (7) geführt wird, wobei das Kupplungselement (6) und das Antriebselement (7) jeweils erste und zweite Elemente (61, 71) zur Drehkopplung miteinander um die Achse aufweisen, um das Kupplungselement (6) ausgehend von dem Antriebselement (7) in Drehung zu versetzen,
wobei das Kupplungselement (6) und die Welle (3) um die Achse drehend gekoppelt sind, um die Welle (3) ausgehend vom Kupplungselement (6) in Drehung zu versetzen,
wobei mindestens ein elastisches Element (9) zur Verschiebung der Axialkräfte zwischen dem Gleitstück (5) und dem Rahmen (2) angeordnet ist.

2. Kopf nach Anspruch 1, **dadurch gekennzeichnet, dass** mindestens ein flexibles, Schwingungen dämpfendes Element (8) zwischen dem Kupplungselement (6) und der Welle (3) angeordnet ist, wobei das Kupplungselement (6) und die Welle (3) jeweils dritte und vierte Elemente (62, 32) zur Drehkopplung um die Achse über das flexible um die Achse dämpfende Element (8) aufweisen, um die Welle (3) ausgehend vom Kupplungselement (6) in Drehung zu versetzen.

3. Kopf nach Anspruch 2, **dadurch gekennzeichnet, dass** die dritten und vierten Elemente (62, 32) zur Drehkopplung jeweils dritte und vierte Zähne (62, 32) aufweisen, die über das dämpfende Element (8) um die Achse miteinander im Eingriff sind.

4. Kopf nach Anspruch 3, **dadurch gekennzeichnet, dass** das Schwingungen dämpfende Element (8) einen Sockel (81) umfasst, an dessen Umfang Laschen (82) befestigt sind, die zwischen sich um die Achse (A) erste und zweite Zwischenräume (831, 832) begrenzen, in denen jeweils die dritten Zähne (62) bzw. die vierten Zähne (32) eingebracht werden.

5. Kopf nach einem der vorstehenden Ansprüche, **dadurch gekennzeichnet, dass** das elastische Element (9) mindestens eine Druckfeder (91) aufweist.

6. Kopf nach einem der vorstehenden Ansprüche, **dadurch gekennzeichnet, dass** das elastische Element (9) zumindest eine Federscheibe aufweist.

7. Kopf nach einem der vorstehenden Ansprüche, **dadurch gekennzeichnet, dass** die ersten und zweiten Kopplungselemente (61, 71) jeweils erste und zweite Nuten aufweisen, die sich entlang der Achse erstrecken, um das Kupplungselement (6) entlang der Achse in Bezug auf das Antriebselement (7) zu führen, und sich miteinander um die Achse im Eingriff befinden, um das Kupplungselement (6) ausgehend vom Antriebselement (7) in Drehung zu versetzen.

8. Kopf nach einem der vorstehenden Ansprüche, **dadurch gekennzeichnet, dass** das Gleitstück (5) mit mindestens einer ersten axialen Führungsschiene (51) fest verbunden ist, wobei der Rahmen (2) mit mindestens einer zweiten axialen Führungsschiene (52) fest verbunden ist, wobei mindestens eine Lagerrolle (53) zwischen der ersten Schiene (51) und der zweiten Schiene (52) montiert ist, um die translatorische Bewegung der ersten Schiene (51) in Bezug auf die zweite Schiene (52) entlang der Achse zu ermöglichen.

9. Kopf nach einem der vorstehenden Ansprüche, **dadurch gekennzeichnet, dass** die Welle (3) mindestens einen ersten Kanal (33) mit mindestens einem ersten Austrittsendabschnitt (34) nach außen und mindestens einem zweiten Endabschnitt aufweist, der mit einem zweiten Kanal (35) in Verbindung steht, der in dem Gleitstück (5) ausgebildet ist, wobei der zweite Kanal (35) an eine erste Leitung zur Zuleitung eines ersten Kühlmittels angeschlossen werden kann.

10. Kopf nach einem der vorstehenden Ansprüche, **dadurch gekennzeichnet, dass** das Gleitstück (5) einen dritten Kanal (36) aufweist, der mindestens einen dritten Endabschnitt (361) für den Fluideintritt aufweist, der an mindestens eine zweite Leitungs für die Zuleitung eines zweiten Kühlmittels angeschlossen werden kann, und mindestens einen vierten Endabschnitt (362) für den Fluidaustritt aufweist, der an mindestens eine dritte Leitung für die Ableitung des zweiten Kühlmittels angeschlossen werden kann.

11. Kopf nach einem der vorstehenden Ansprüche, **dadurch gekennzeichnet, dass** er mindestens einen Messsensor (11) umfasst, mit dem die Kraft ermittelt werden kann, die auf das Gleitstück (5) ausgeübt wird.

12. Kopf nach einem der vorstehenden Ansprüche, **dadurch gekennzeichnet, dass** er mindestens ein Element (12) zur Verriegelung und Entriegelung des Gleitstücks (5) in Bezug auf den Rahmen (2) bei der Translation entlang der Achse umfasst.

13. Kopf nach einem der vorstehenden Ansprüche, **dadurch gekennzeichnet, dass** er mindestens einen Temperatursensor umfasst, mit dem die Erwärmungstemperatur des Kopfes überwacht werden kann.

14. Kopf nach Anspruch 1, **dadurch gekennzeichnet, dass** das Kupplungselement (6) und die Welle (3) fest miteinander und/oder drehfest miteinander verbunden sind und/oder aus einem Stück bestehen und/oder aneinander befestigt sind.

15. Kopf nach einem der vorstehenden Ansprüche, **dadurch gekennzeichnet, dass** der Werkzeughalter (4) und die Welle (3) aus einem Stück bestehen.

## Claims

1. A friction stir welding head (1), intended to be fastened on a machine to perform a friction stir welding using a tool intended to be fastened to a tool holder (4), forming part of the head,
the head including an outer frame (2), intended to be fastened to a chassis of the machine, a driving part (7), intended to be driven by a driving spindle, which forms part of the machine and which is rotatably mounted about an axis relative to the chassis, to drive in rotation the tool holder (4) about the axis by rotating the driving part (7),
**characterized in that** the tool holder (4) is fastened to a shaft (3) rotatably mounted about the axis in a slide (5), which is guided in translation along the axis in the frame (2),
at least one coupling part (6) being guided in translation along the axis on the driving part (7), the coupling part (6) and the driving part (7) having respectively first and second coupling members (61, 71) in rotation with each other about the axis to drive in rotation the coupling part (6) from the driving part (7),
the coupling part (6) and the shaft (3) being coupled in rotation about the axis to drive in rotation the shaft (3) from the coupling part (6),
at least one elastic element (9) for transferring the axial forces being interposed between the slide (5) and the frame (2).

2. The head according to claim 1, **characterized in that** at least one flexible member (8) for absorbing vibrations is interposed between the coupling part (6) and the shaft (3), the coupling part (6) and the shaft (3) having respectively third and fourth rotational coupling members (62, 32) via the flexible absorption member (8) about the axis to drive in rotation the shaft (3) from the coupling part (6).

3. The head according to claim 2, **characterized in that** the third and fourth rotational coupling members (62, 32) include respectively third and fourth teeth (62, 32) meshing with each other about the axis via the absorption member (8).

4. The head according to claim 3, **characterized in that** the vibration absorption member (8) includes a base (81) on the periphery of which tabs (82) are fastened, which delimit therebetween, about the axis (A), first and second intervals (831, 832) in which the third teeth (62) and the fourth teeth (32) are respectively inserted.

5. The head according to any one of the preceding claims, **characterized in that** the elastic element (9) includes at least one compression spring (91).

6. The head according to any one of the preceding claims, **characterized in that** the elastic element (9) includes at least one spring washer.

7. The head according to any one of the preceding claims, **characterized in that** the first and second coupling members (61, 71) include respectively first and second splines extending along the axis, to guide along the axis the coupling part (6) relative to the driving part (7), and meshing with each other about the axis to drive in rotation the coupling part (6) from the driving part (7).

8. The head according to any one of the preceding claims, **characterized in that** the slide (5) is secured to at least a first axial guide rail (51), the frame (2) is secured to at least a second axial guide rail (52), at least one bearing roller (53) being mounted between the first rail (51) and the second rail (52) to allow translation of the first rail (51) relative to the second rail (52) along the axis.

9. The head according to any one of the preceding claims, **characterized in that** the shaft (3) includes at least a first duct (33) having at least a first outlet end (34) to the outside and at least a second end being in communication with a second duct (35) arranged in the slide (5), the second duct (35) being able to be put in communication with a first pipe for feeding a first coolant fluid.

10. The head according to any one of the preceding claims, **characterized in that** the slide (5) includes a third duct (36) including at least a third fluid inlet end portion (361), able to be put in communication with at least a second pipe for feeding a second coolant fluid, and at least a fourth fluid outlet end (362) able to be put in communication with at least a third pipe for discharging the second coolant fluid.

11. The head according to any one of the preceding claims, **characterized in that** it includes at least one measuring sensor (11) for determining the force exerted on the slide (5).

12. The head according to any one of the preceding claims, **characterized in that** it includes at least one member (12) for locking and unlocking the slide (5) relative to the frame (2) in translation along the axis.

13. The head according to any one of the preceding claims, **characterized in that** it includes at least one temperature sensor for monitoring the heating temperature of the head.

14. The head according to claim 1, **characterized in that** the coupling part (6) and the shaft (3) are secured to each other and/or are secured in rotation to each other and/or are formed in one piece and/or are fastened to each other.

15. The head according to any one of the preceding claims, **characterized in that** the tool holder (4) and the shaft (3) are formed in one piece.
